# FASCICULE DE BREVET EUROPEEN

(11) **EP 3 717 359 B1**
(45) Date de publication et mention de la délivrance du brevet: **05.01.2022**
(21) Numéro de dépôt: 18826422.0
(22) Date de dépôt: 28.11.2018
(51) Int. Cl.: B64G 1/64, F42B 15/36, B64G 1/00

(54) **SYSTEME DE SEPARATION MULTIPOINTS**
MEHRPUNKT-TRENNUNGSSYSTEM
MULTIPOINT SEPARATION SYSTEM

(30) Priorité: 29.11.2017 FR 1761361
(43) Date de publication de la demande: 07.10.2020
(73) Titulaire: ArianeGroup SAS, 75015 Paris (FR)
(72) Inventeur: MEDINA, Felipe, 78500 Sartrouville (FR)
(74) Mandataire: Brevalex
(86) Numéro de dépôt international: PCT/FR2018/053019
(87) Numéro de publication internationale: WO 2019/106288

(56) Documents cités:
- JP-A- 2007 083 801
- US-A- 3 863 570
- US-A- 5 218 165
- US-B1- 6 289 818
- US-B1- 6 758 142
- US-B2- 8 082 848

## Description

### DOMAINE TECHNIQUE

L'invention concerne un système de séparation de composites d'un lanceur spatial, destiné à agir simultanément en plusieurs points.

### ÉTAT DE LA TECHNIQUE ANTÉRIEURE

Les programmes récents de développement de lanceurs spatiaux ont pour conséquence une réduction du nombre de moyens de séparation pyrotechniques.

Aussi, les systèmes pyrotechniques pour la séparation rendent toute intervention au sol complexe car ils ne sont pas aisément démontables, leur accès par un opérateur est en outre particulièrement difficile.

De plus, chacun de ces systèmes pyrotechniques est associé à un dispositif de contrôle associé, ce qui implique la gestion d'un nombre important de signaux électriques dans le lanceur.

L'invention a pour but de proposer un système de séparation de composites d'un lanceur spatial qui est de conception simplifiée par rapport à l'art antérieur et pour lequel le nombre de signaux électriques, commandant l'activation des multiples points de séparation, est réduit. US8082848 B2, JP2007 083801, US6758142 B1, US 3863570 divulguent des systèmes non pyrotechniques, utilisant une actuation pneumatique ou hydraulique.

### EXPOSÉ DE L'INVENTION

L'invention concerne un système de séparation de composites d'un lanceur spatial tel que défini dans la revendication 1.

De préférence, le dispositif d'activation est monté sur un composite, à proximité des modules de séparation.

De préférence, le convertisseur hydropneumatique est monté sur un composite, à proximité des modules de séparation.

### BRÈVE DESCRIPTION DES DESSINS

D'autres caractéristiques et avantages de l'invention apparaîtront à la lecture de la description détaillée qui suit pour la compréhension de laquelle on se reportera aux figures annexées parmi lesquelles :
- la figure 1 est une représentation schématique d'un exemple d'un système de séparation de composites d'un lanceur spatial, exclu du champ d'application de la présente invention;
- la figure 2 est une représentation schématique du mode de réalisation d'un système de séparation de composites d'un lanceur spatial.

### EXPOSÉ DÉTAILLÉ DE MODES DE RÉALISATION PARTICULIERS

On a représenté aux figures un système de séparation 10 pour des composites, aussi appelés étages, d'un lanceur spatial.

Dans la description qui va suivre, on fera référence à un système de séparation de deux composites adjacents. Il sera compris que cette description s'applique à un système de séparation 10 permettant la séparation de plus de deux composites du lanceur.

Les deux composites du lanceur comportent chacun une virole cylindrique et les deux viroles sont assemblées l'une à l'autre bout à bout de façon détachable. Au cours d'une phase de lancement, les deux composites se séparent, par la séparation de façon contrôlée des deux viroles.

Le système de séparation 10 comporte des modules de séparation 12 qui sont réalisés pour séparer les composites, notamment en mettant fin à la liaison entre les deux viroles.

Les modules de séparation 12 sont du type non pyrotechnique, c'est-à-dire qu'ils n'utilisent pas l'explosion d'une charge pour provoquer la séparation des deux viroles. Cela permet d'une part de sécuriser toute intervention au sol, sans risque pour un opérateur.

Aussi, de tels modules de séparation 12 sont généralement réversibles, ce qui permet de procéder à des essais au sol de la séparation sans avoir à changer ceuxci, ou d'autres composants après chaque essai.

Pour permettre une séparation dans de bonnes conditions, les modules de séparation 12 sont répartis de manière homogène le long de la liaison entre les deux viroles.

Le système de séparation 10 comporte aussi un dispositif d'activation 14 des modules de séparation 12 qui est apte à provoquer l'activation simultanée de tous les modules de séparation 12.

Ce dispositif d'activation 14 est relié à un dispositif électronique de commande 20 faisant partie du lanceur par une ligne de transmission de signal 22. Le dispositif électronique de commande 20 émet un signal de commande unique vers le dispositif d'activation 14 pour provoquer l'activation de tous les modules de séparation 12.

L'ensemble formé par le dispositif d'activation 14 et le dispositif de commande 20 permet de n'utiliser qu'un seul signal électrique, sur une seule ligne de transmission de signal 22 dans tout le lanceur, ce qui permet ainsi de réduire la complexité du lanceur par rapport à un mode de réalisation comportant une ligne de transmission de signal pour chaque module de séparation.

Le dispositif d'activation 14 consiste en une source de gaz comprimé et sa sortie est reliée à chaque module de séparation 12.

Selon un premier mode de réalisation, le dispositif d'activation 14 consiste en un réservoir de gaz sous pression dont la sortie, qui est reliée aux modules de séparation 12, est ouverte lorsque le signal électrique associé à la séparation des viroles est émis par le dispositif électronique de commande 20.

Selon un deuxième mode de réalisation, le dispositif d'activation 14 est un dispositif pyrotechnique qui produit du gaz suite à son ignition lorsque le signal électrique associé à la séparation des viroles est émis par le dispositif électronique de commande 20.

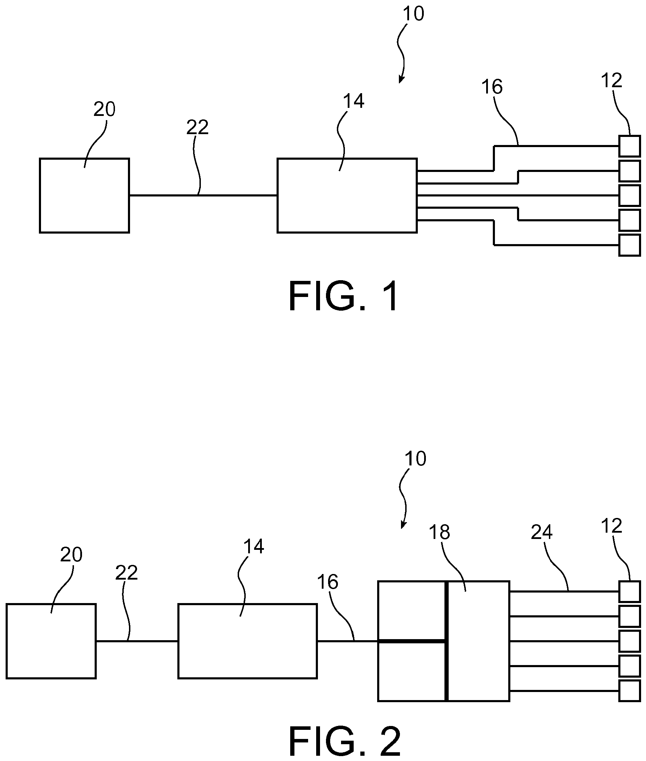

Selon l'exemple exclu du champ d'application de la présente invention et représenté à la figure 1, les modules de séparation 12 sont du type pneumatique, c'est-à-dire que chaque module de séparation 12 utilise l'énergie d'un flux de gaz comprimé pour provoquer la séparation des composites et/ou de leurs viroles.

A titre d'exemple non limitatif, chaque module de séparation 12 correspond à l'un des différents points d'accroche et donc de séparation d'un satellite à son dispenser.

Dans cet exemple, le dispositif d'activation 14 est relié directement à chaque module de séparation 12 par un conduit pneumatique 16.

Pour permettre une activation simultanée de tous les modules de séparation 12, les conduits pneumatiques 16 sont de préférence de même longueur.

De préférence, le dispositif d'activation 14 est disposé à l'intérieur de l'un des deux composites, à proximité des modules de séparation 12. Ainsi, même si le système de séparation 10 comporte autant de conduits pneumatiques 16 que de modules de séparation 12, la longueur de ces conduits pneumatiques 16 est limitée par rapport à la distance entre les modules de séparation 12 et le dispositif électronique de commande.

Selon le mode de réalisation de l'invention, représenté à la figure 2, les modules de séparation 12 sont du type hydraulique, c'est-à-dire que chaque module de séparation 12 utilise l'énergie d'un fluide sous pression pour provoquer la séparation des composites et/ou de leurs viroles.

Conformément à ce mode de réalisation, le système de séparation 10 comporte un convertisseur hydropneumatique 18 qui est interposé entre le dispositif d'activation 14 et les modules de séparation 12.

Ce convertisseur hydropneumatique 18 est actionné par l'énergie pneumatique du gaz sous pression produite par le dispositif d'activation 14 et transforme cette énergie pneumatique en une énergie hydraulique alimentant les modules de séparation 12.

Ainsi, la sortie du dispositif d'activation 14 est reliée au convertisseur hydropneumatique 18 par un conduit pneumatique 16 et chaque module de séparation 12 est relié au convertisseur hydropneumatique 18 par un conduit hydraulique associé 24.

Pour permettre une activation simultanée de tous les modules de séparation 12, les conduits hydrauliques 24 sont de préférence de même longueur.

Ici aussi, de préférence, le dispositif d'activation 14 est disposé à l'intérieur de l'un des deux composites, à proximité des modules de séparation 12.

Le convertisseur hydropneumatique 18 est par conséquent agencé à l'intérieur de ce même composite qui porte le dispositif d'activation, à proximité des modules de séparation 12.

Selon une variante de réalisation, le dispositif d'activation est disposé à distance des modules de séparation et c'est seul le convertisseur hydropneumatique 18 qui est agencé sur un composite, à proximité des modules de séparation 12

Ainsi, même si le système de séparation 10 comporte autant de conduits hydrauliques 24 que de modules de séparation 12, la longueur de ces conduits hydrauliques 24 est limitée par rapport à la distance entre les modules de séparation 12 et le dispositif électronique de commande.

Comme on l'a dit précédemment, le système de séparation 10 peut être mis en œuvre pour la séparation de deux composites de lanceur, et aussi pour la séparation de plus de deux composites.

Dans le cas où le système de séparation 10 est utilisé pour la séparation de plus de deux composites, ces composites peuvent être séparés simultanément en raccordant le dispositif d'activation 14, et éventuellement le convertisseur hydropneumatique 18 aux modules de séparation 12 qui sont associés aux viroles des composites devant être séparés.

Les composants du système de séparation 10 sont de conception courante, ce qui permet de limiter les couts de sa réalisation.

## Revendications

1. Système de séparation (10) de composites d'un lanceur spatial, comportant des modules de séparation non pyrotechniques (12) destinés à être répartis entre les composites à séparer
et un dispositif d'activation (14) des modules de séparation (12) qui est apte à provoquer l'activation simultanée de tous les modules de séparation (12) et qui consiste en une source de gaz comprimé dont la sortie est reliée à chaque module de séparation (12),
**caractérisé en ce que** chaque module de séparation (12) utilise l'énergie d'un fluide sous pression pour provoquer la séparation des composites,
et **en ce qu'**un convertisseur hydropneumatique (18) est interposé entre le dispositif d'activation (14) et les modules de séparation (12) et chaque module de séparation (12) est relié au convertisseur hydropneumatique par un conduit hydraulique (24).

2. Système de séparation (10) selon la revendication précédente, **caractérisé en ce que** le dispositif d'activation (14) est destiné à être monté sur un composite, à proximité des modules de séparation (12).

3. Système de séparation (10) selon l'une quelconque des revendications précédentes, **caractérisé en ce que** le convertisseur hydropneumatique (18) est destiné à être monté sur un composite, à proximité des modules de séparation (12).

## Patentansprüche

1. Trennsystem (10) für Verbundstoffe einer Trägerrakete, enthaltend nichtpyrotechnische Trennmodule (12), die dazu bestimmt sind, zwischen den zu trennenden Verbundstoffen verteilt zu werden, und eine Vorrichtung (14) zur Aktivierung der Trennmodule (12), die geeignet ist, die gleichzeitige Aktivierung aller Trennmodule (12) zu bewirken, und die aus einer Druckgasquelle besteht, deren Auslass mit jedem Trennmodul (12) verbunden ist,
**dadurch gekennzeichnet, dass** jedes Trennmodul (12) die Energie eines unter Druck stehenden Fluids nutzt, um die Trennung der Verbundstoffe zu bewirken, und dass ein hydropneumatischer Wandler (18) zwischen der Aktivierungsvorrichtung (14) und den Trennmodulen (12) angeordnet ist und jedes Trennmodul (12) mit dem hydropneumatischen Wandler durch eine Hydraulikleitung (24) verbunden ist.

2. Trennsystem (10) nach dem vorhergehenden Anspruch, **dadurch gekennzeichnet, dass** die Aktivierungsvorrichtung (14) dazu bestimmt ist, an einen Verbundstoff in der Nähe der Trennmodule (12) angebracht zu werden.

3. Trennsystem (10) nach einem der vorhergehenden Ansprüche, **dadurch gekennzeichnet, dass** der hydropneumatische Wandler (18) dazu bestimmt ist, an einen Verbundwerkstoff in der Nähe der Trennmodule (12) angebracht zu werden.

## Claims

1. System for separating (10) composites of a space launch vehicle comprising non-pyrotechnic separation modules (12) intended to be distributed between the composites to separate
and an activation device (14) for activating the separation modules (12) which is capable of causing the simultaneous activation of all the separation modules (12) and which consists in a compressed gas source, the output of which is connected to each separation module (12),
**characterised in that** each separation module (12) uses the energy of a pressurised fluid to cause the separation of the composites,
and **in that** a hydropneumatic converter (18) is interposed between the activation device (14) and the separation modules (12) and each separation module (12) is connected to the hydropneumatic converter by a hydraulic conduit (24).

2. Separation system (10) according to claim 1, **characterised in that** the activation device (14) is intended to be mounted on a composite, near to the separation modules (12).

3. Separation system (10) according to claim 1 or 2, **characterised in that** the hydropneumatic converter (18) is intended to be mounted on a composite, near to the separation modules (12).
